# EUROPEAN PATENT SPECIFICATION

(11) **EP 1 009 221 B1**
(45) Date of publication and mention of the grant of the patent: **26.03.2003**
(21) Application number: 99931584.9
(22) Date of filing: 01.07.1999
(51) Int. Cl.: A01J 7/02, A01J 7/04

(54) **A METHOD OF AND A DEVICE FOR DISINFECTING A MILKING MACHINE AND/OR A CLEANING DEVICE FOR THE TEATS OF AN ANIMAL**
VERFAHREN UND VORRICHTUNG ZUR DESINFEKTION EINES MELKGERÄTS UND/ODER REINIGUNGSEINRICHTUNG FÜR DIE ZITZEN EINES TIERES
PROCEDE ET DISPOSITIF POUR DESINFECTER UNE MACHINE A TRAIRE ET/OU UN DISPOSITIF DE LAVAGE DES MAMELLES D'UN ANIMAL

(30) Priority: 06.07.1998 NL 1009561; 15.07.1998 NL 1009663
(43) Date of publication of application: 21.06.2000
(60) Divisional application: 02079496.2
(73) Proprietor: MAASLAND N.V., 3155 PD Maasland (NL)
(72) Inventor: VAN DEN BERG, Karel, NL-2971 BR Bleskensgraaf (NL); OTTEN, Martijn, NL-2611 KK Delft (NL)
(74) Representative: Corten, Maurice Jean F.M.
(86) International application number: PCT/NL99/00412
(87) International publication number: WO 00/001224

(56) References cited:
- EP-A- 0 819 388
- DATABASE WPI Section PQ, Week 8549 Derwent Publications Ltd., London, GB; Class P13, AN 85-309298 XP002094675 & SU 1 159 521 A (LATV AGRIC ACAD), 7 June 1985 (1985-06-07) cited in the application

## Description

The invention relates to a method of disinfecting at least those parts of a milking machine and/or at least those parts of a cleaning device for cleaning the udder and/or the teats of an animal to be milked that come into contact with the udder and/or the teats of an animal.

Such a method is known, for example from EP-A-0819388.

In such a method a cleaning and/or disinfecting fluid is usually applied. Such a method has the disadvantage of being rather time-consuming and of eliminating not all the undesired micro-organisms.

The invention aims at providing a method and/or a device in which the above-mentioned drawbacks do not occur or are at least minimized.

In accordance with the invention this is achieved by the features of the characterizing part of claim 1. In this manner a great part of the machine and/or the device can be disinfected by means of one light source. According to another inventive feature, the rays have a wavelength ranging between 100 and 280 nanometres.

Light having such a wavelength, also called UVC-light, appears to be particularly effective for eliminating undesired bacteria, such as the common E-coli bacterium. In this manner a so-called cross-infection between the animals, caused by the fact that the various parts of the milking machine and/or the cleaning device come into contact with the teats and/or the udder of various animals, is prevented.

From the Russian patent 1159521 it is known per se to apply a UV-lamp in a milk tank for the purpose of killing the bacteria present therein.

According to an inventive feature, for the purpose of automating this relative movement, the parts to be disinfected are moved relative to each other by means of one or more operating members, such as a robot arm, for example.

In accordance with an inventive feature, before an animal comes into contact with certain parts of the milking machine and/or with certain parts of the cleaning device, the relevant parts are disinfected by means of the light source.

For obtaining a still better disinfection of the relevant parts, said parts are cleaned by means of a cleaning fluid before being disinfected and/or after having been disinfected by means of the light source.

The invention further relates to an implement for milking and/or cleaning the udder and/or the teats of animals according to claim 6. According to an inventive feature, the rays have a wavelength ranging between 100 and 280 nanometres.

In accordance with an inventive feature, the disinfecting device is fitted to the milking machine. According to another inventive feature, the disinfecting device is disposed on a robot arm which can be controlled automatically. In again another embodiment of the invention the light source is disposed on a flexible, controllable arm, such as an endoscope.

In accordance with an inventive feature, the disinfecting device comprises a tubular light source and/or a light source which is fitted to an end of a pin-shaped element. The tubular light source and/or the pin-shaped element can be inserted in a simple manner into the teat cup and/or be passed through the milk line. In another embodiment of the invention, the light source is designed as an optical cable, such as a glass fibre cable.

The invention will now be explained in further detail with reference to the accompanying drawings.

Figure 1 shows a first embodiment of a UVC-light source which is designed as a pin-shaped element, and

Figure 2 is a cross-section of a teat cup with a disinfecting device designed as an endoscope included therein.

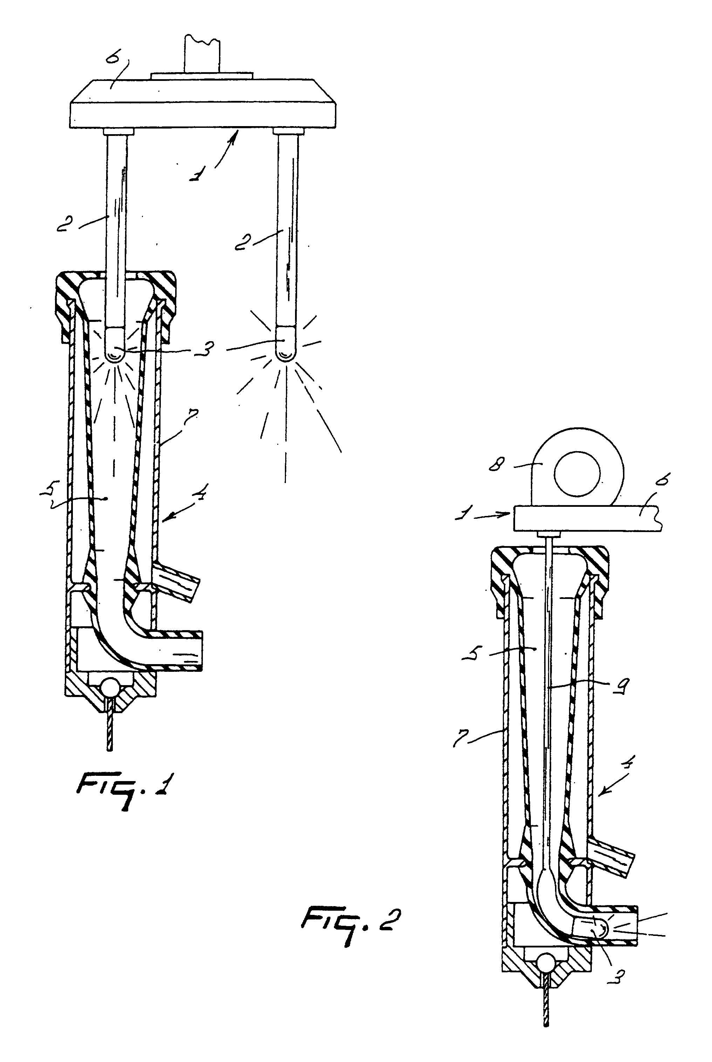

Figure 1 shows a first embodiment in which the disinfecting device 1 is designed as a pin-shaped element 2 whose end is provided with a UVC-light source 3.

Figure 1 is a cross-section of a teat cup 4 provided with a liner 5. The disinfecting device 1 comprises a carrier 6 on which, in the present embodiment, there are disposed four pin-shaped elements 2 each provided with a UVC-light source 3, the arrangement being such that four teat cups can be disinfected simultaneously. The UVC-light sources 3 are connected to a (non-shown) energy source. The length and the diameter of the pin-shaped elements 2 are chosen in such a manner that the pin-shaped elements 2 can be introduced into the teat cup 4 at least along the greater part of the liner 5. The relative speed between the teat cups 4 and the pin-shaped elements 2 is chosen in such a manner that each part of the liner 5 is exposed sufficiently long to the UVC-radiation supplied by the light source 3, so that an optimal disinfection is obtained. In the present embodiment both the disinfecting device 1 and the teat cup 4 can be moved relative to each other by means of a (non-shown) robot arm during disinfecting.

Figure 2 shows a second embodiment of a disinfecting device 1 according to the invention, in which embodiment parts corresponding to those of the previous embodiment are again indicated by the same reference numerals. In the second embodiment of the invention the disinfecting device 1 is designed as an endoscope. The disinfecting device 1 comprises a reel 8 around which a cable 9 is wound, which cable 9 is provided at its end with a UVC-light source 3. The cable 9 can be wound and unwound automatically, the arrangement being such that the UVC-light source 3 can be passed through the teat cup 4 and through the (non-shown) milk line system or other parts of the milking machine that come into contact with milk.

## Claims

1. A method of disinfecting at least those parts of a milking machine and/or at least those parts of a cleaning device for cleaning the udder and/or the teats of an animal to be milked that come into contact with the udder and/or the teats of an animal, **characterized in that** the relevant parts are disinfected by means of a light source (3) transmitting ultraviolet rays, and **in that**, for disinfecting various parts of the milking machine and/or the cleaning device, the light source (3) and the parts to be disinfected are moved relative to each other.

2. A method as claimed in claim 1, **characterized in that** the rays have a wavelength ranging between 100 and 280 nanometres.

3. A method as claimed in claim 1 or 2, **characterized in that** the relative movement is realized by means of one or more operating members, such as e.g. a robot arm.

4. A method as claimed in any one of the preceding claims, **characterized in that**, before an animal comes into contact with certain parts of the milking machine and/or with certain parts of the cleaning device, the relevant parts are disinfected by means of the light source (3).

5. A method as claimed in any one of the preceding claims, **characterized in that** the relevant parts are cleaned by means of a cleaning fluid before being disinfected and/or after having been disinfected by means of the light source (3).

6. An implement for milking and/or cleaning the udder and/or the teats of animals, comprising a milking machine and/or a cleaning device for cleaning the udder and/or the teats of an animal, being provided with at least one teat cup (4), **characterized in that** the implement comprises at least one disinfecting device (1) for disinfecting at least those parts of a milking machine and/or at least those parts of a cleaning device for cleaning the udder and/or the teats of an animal to be milked that come into contact with the udder and/or the teats of an animal, said disinfecting device (1) being provided with at least one light source (3) transmitting ultraviolet rays, said light source (3) and said parts to be disinfected being moveable relative to each other.

7. An implement as claimed in claim 6, **characterized in that** the rays have a wavelength ranging between 100 and 280 nanometres.

8. An implement as claimed in claim 6 or 7,
**characterized in that** the disinfecting device (1) is fitted to the milking machine.

9. An implement as claimed in claim 6 or 7, **characterized in that** the disinfecting device (1) is disposed on a robot arm which can be controlled automatically.

10. An implement as claimed in any one of claims 6 - 9, **characterized in that** the light source (3) is disposed on a flexible, controllable arm or cable, such as an endoscope.

11. An implement as claimed in any one of claims 6 - 10, **characterized in that** the disinfecting device (1) comprises a tubular light source and/or a light source which is fitted to an end of a pin-shaped element (2).

12. An implement as claimed in any one of claims 6 - 11, **characterized in that** the light source (3) is designed as an optical cable, such as a glass fibre cable.

## Patentansprüche

1. Verfahren zum Desinfizieren zumindest derjenigen Teile einer Melkmaschine und/oder zumindest derjenigen Teile einer Reinigungsvorrichtung zum Reinigen des Euters und/oder der Zitzen eines zu melkenden Tieres, die mit dem Euter und/oder den Zitzen eines Tieres in Kontakt kommen,
**dadurch gekennzeichnet, daß** die betreffenden Teile mit Hilfe einer Lichtquelle (3) desinfiziert werden, die ultraviolette Strahlen aussendet, und daß zum Desinfizieren verschiedener Teile der Melkmaschine und/oder der Reinigungsvorrichtung die Lichtquelle (3) und die zu desinfizierenden Teile relativ zueinander bewegt werden.

2. Verfahren nach Anspruch 1,
**dadurch gekennzeichnet, daß** die Strahlen einen Wellenlängenbereich von 100 bis 280 Nanometern aufweisen.

3. Verfahren nach Anspruch 1 oder 2,
**dadurch gekennzeichnet, daß** die Relativbewegung mit Hilfe eines oder mehrerer Betätigungsglieder, wie z. B. einem Roboterarm, erfolgt.

4. Verfahren nach einem der vorhergehenden Ansprüche,
**dadurch gekennzeichnet, daß** die entsprechenden Teile mittels der Lichtquelle (3) desinfiziert werden, bevor ein Tier in Kontakt mit bestimmten Teilen der Melkmaschine und/oder mit bestimmten Teilen der Reinigungsvorrichtung kommt.

5. Verfahren nach einem der vorhergehenden Ansprüche,
**dadurch gekennzeichnet, daß** die entsprechenden Teile mittels einer Reinigungsflüssigkeit gereinigt werden, bevor sie desinfiziert werden und/oder nachdem sie mittels der Lichtquelle (3) desinfiziert worden sind.

6. Vorrichtung zum Melken und/oder Reinigen des Euters und/oder der Zitzen von Tieren, die eine Melkmaschine und/oder eine Reinigungsvorrichtung zum Reinigen des Euters und/oder der Zitzen eines Tieres mit mindestens einem Zitzenbecher (4) umfaßt,
**dadurch gekennzeichnet, daß** die Vorrichtung mindestens eine Desinfektionsvorrichtung (1) zum Desinfizieren zumindest derjenigen Teile einer Melkmaschine und/oder zumindest derjenigen Teile einer Reinigungsvorrichtung zum Reinigen des Euters und/oder der Zitzen eines zu melkenden Tieres umfaßt, die mit dem Euter und/oder den Zitzen eines Tieres in Kontakt kommen, wobei die Desinfektionsvorrichtung (1) mit mindestens einer Lichtquelle (3) versehen ist, die ultraviolette Strahlen aussendet, wobei die Lichtquelle (3) und die zu desinfizierenden Teile relativ zueinander bewegbar sind.

7. Vorrichtung nach Anspruch 6,
**dadurch gekennzeichnet, daß** die Strahlen einen Wellenlängenbereich von 100 bis 280 Nanometern aufweisen.

8. Vorrichtung nach Anspruch 6 oder 7,
**dadurch gekennzeichnet, daß** die Desinfektionsvorrichtung (1) an der Melkmaschine angebracht ist.

9. Vorrichtung nach Anspruch 6 oder 7,
**dadurch gekennzeichnet, daß** die Desinfektionsvorrichtung (1) an einem Roboterarm angeordnet ist, der automatisch gesteuert werden kann.

10. Vorrichtung nach einem der Ansprüche 6 bis 9,
**dadurch gekennzeichnet, daß** die Lichtquelle (3) an einem flexiblen, steuerbaren Arm oder Kabel, wie z. B. einem Endoskop, angeordnet ist.

11. Vorrichtung nach einem der Ansprüche 6 bis 10,
**dadurch gekennzeichnet, daß** die Desinfektionsvorrichtung (1) eine rohrförmige Lichtquelle und/oder eine Lichtquelle umfaßt, die an einem Ende eines stiftförmigen Elementes (2) angeordnet ist.

12. Vorrichtung nach einem der Ansprüche 6 bis 11,
**dadurch gekennzeichnet, daß** die Lichtquelle (3) als Lichtleiterkabel, wie z. B. Glasfaserkabel, ausgeführt ist.

## Revendications

1. Procédé de désinfection d'au moins les parties d'une machine à traire et/ou d'au moins les parties d'un dispositif de nettoyage pour nettoyer le pis et/ou les trayons d'un animal à traire qui viennent en contact avec le pis et/ou les trayons d'un animal, **caractérisé en ce que** les parties en question sont désinfectées au moyen d'une source de lumière (3) transmettant des rayons ultraviolets, et **en ce que**, pour désinfecter diverses parties de la machine à traire et/ou du dispositif de nettoyage, la source de lumière (3) et les parties à désinfecter sont déplacées entre elles.

2. Procédé selon la revendication 1, **caractérisé en ce que** les rayons ont une longueur d'onde comprise dans la plage allant de 100 à 280 nanomètres.

3. Procédé selon la revendication 1 ou la revendication 2, **caractérisé en ce que** le mouvement relatif est effectué au moyen d'un ou plusieurs éléments fonctionnels, comme par exemple un bras de robot.

4. Procédé selon l'une quelconque des revendications précédentes, **caractérisé en ce que**, avant qu'un animal ne vienne en contact avec certaines parties de la machine à traire et/ou avec certaines parties du dispositif de nettoyage, les parties en question sont désinfectées au moyen de la source de lumière (3).

5. Procédé selon l'une quelconque des revendications précédentes, **caractérisé en ce que** les parties en question sont nettoyées au moyen d'un fluide de nettoyage avant d'être désinfectées et/ou après avoir été désinfectées au moyen de la source de lumière (3).

6. Appareil pour traire et/ou nettoyer la mamelle et/ou les trayons d'animaux, comprenant une machine à traire et/ou un dispositif de nettoyage pour nettoyer le pis et/ou les trayons d'un animal, muni d'au moins un gobelet trayeur (4), **caractérisé en ce que** l'appareil comprend au moins un dispositif de désinfection (1) pour désinfecter au moins les parties d'une machine à traire et/ou au moins les parties d'un dispositif de nettoyage pour nettoyer le pis et/ou les trayons d'un animal à traire qui viennent en contact avec le pis et/ou les trayons d'un animal, ledit dispositif de désinfection (1) étant muni d'au moins une source de lumière (3) transmettant des rayons ultraviolets, ladite source de lumière (3) et lesdites parties à désinfecter étant mobiles entre elles.

7. Appareil selon la revendication 6, **caractérisé en ce que** les rayons ont une longueur d'onde comprise dans la plage allant de 100 à 280 nanomètres.

8. Appareil selon la revendication 6 ou la revendication 7, **caractérisé en ce que** le dispositif de désinfection (1) est fixé à la machine à traire.

9. Appareil selon la revendication 6 ou la revendication 7, **caractérisé en ce que** le dispositif de désinfection (1) est disposé sur un bras de robot qui peut être commandé automatiquement.

10. Appareil selon l'une quelconque des revendications 6 à 9, **caractérisé en ce que** la source de lumière (3) est disposée sur un bras ou un câble flexible pouvant être commandé, tel qu'un endoscope.

11. Appareil selon l'une quelconque des revendications 6 à 10, **caractérisé en ce que** le dispositif de désinfection (1) comprend une source de lumière tubulaire et/ou une source de lumière qui est fixée à une extrémité d'un élément en forme de broche (2).

12. Appareil selon l'une quelconque des revendications 6 à 11, **caractérisé en ce que** la source de lumière (3) est conçue comme un câble optique, tel qu'un câble en fibre de verre.
